# FASCICULE DE BREVET EUROPEEN

(11) **EP 2 768 055 B1**
(45) Date de publication et mention de la délivrance du brevet: **30.03.2016**
(21) Numéro de dépôt: 14154765.3
(22) Date de dépôt: 12.02.2014
(51) Int. Cl.: H01M 8/02, H01M 8/10

(54) **PLAQUE BIPOLAIRE MÉTALLIQUE POUR PILE À COMBUSTIBLE À MEMBRANE ÉCHANGEUSE DE PROTONS**
BIPOLARE METALLPLATTE FÜR BRENNSTOFFZELLE MIT PROTONENAUSTAUSCHMEMBRAN
BIPOLAR METAL PLATE FOR FUEL CELL WITH PROTON EXCHANGE MEMBRANE

(30) Priorité: 15.02.2013 FR 1351331
(43) Date de publication de la demande: 20.08.2014
(73) Titulaire: Commissariat à l'Energie Atomique et aux Energies Alternatives, 75015 Paris (FR)
(72) Inventeur: Vincent, Rémi, 38000 Grenoble (FR); Tard, Julien, 38070 Saint-Quentin-Fallavier (FR)
(74) Mandataire: Cabinet Laurent & Charras

(56) Documents cités:
- EP-A2- 2 234 192
- US-A1- 2004 091 768
- US-A1- 2011 223 522
- US-B1- 7 699 916

## Description

### DOMAINE DE L'INVENTION

La présente invention concerne une plaque bipolaire métallique pour pile à combustible, et plus particulièrement pour pile à combustible à membrane échangeuse de protons (PEMFC). Selon l'invention, cette plaque présente un revêtement comprenant un composé capable d'absorber les cations métalliques, avantageusement sous forme d'un ionomère, par exemple de type polymère d'acide sulfonique perfluoré (PFSA).

Une pile dotée d'une telle plaque, utilisable notamment pour la production d'énergie électrique, résiste mieux à la corrosion et présente de meilleures performances ainsi qu'une durabilité accrue. Ce type de piles peut notamment être envisagé comme source d'énergie pour des véhicules automobiles produits à grande échelle dans le futur.

### ETAT ANTERIEUR DE LA TECHNIQUE

Une pile à combustible est un dispositif électrochimique qui convertit de l'énergie chimique directement en énergie électrique. Une pile à combustible comprend un empilement en série de plusieurs cellules. Chaque cellule génère une tension de l'ordre de 0,7 Volt et leur empilement permet de générer une tension d'alimentation d'un niveau plus élevé, par exemple de l'ordre d'une centaine de volts.

Plus particulièrement, une pile à combustible à membrane échangeuse de protons ou PEMFC (de l'acronyme anglo-saxon « *Proton Exchange Membrane Fuel Cell »*) comprend au moins une cellule unitaire contenant un assemblage membrane-électrodes ou AME, constitué d'une membrane électrolytique permettant le passage sélectif des protons et, de part et d'autre de cette membrane, l'anode et la cathode.

La membrane est généralement constituée d'un ionomère perfluorosulfoné (PFSA), tel que le Nafion^{®}. Les électrodes, également appelées couches catalytiques ou actives, contiennent un catalyseur, avantageusement du platine (Pt), supporté par du carbone, et éventuellement un ionomère, en général le même que celui constituant la membrane.

Au niveau de l'anode, du dihydrogène (H₂), utilisé comme carburant, est ionisé pour produire des protons traversant la membrane. Les électrons produits par cette réaction migrent vers une plaque d'écoulement, puis traversent un circuit électrique externe à la cellule pour former un courant électrique. Au niveau de la cathode, de l'oxygène (O₂) est réduit et réagit avec les protons ayant traversé la membrane pour former de l'eau.

Des couches de diffusion gazeuse ou GDL (de l'acronyme anglo-saxon *« Gaz Diffusion Layer*»), classiquement en fibres de graphite, sont interposées entre les électrodes et les plaques d'écoulement.

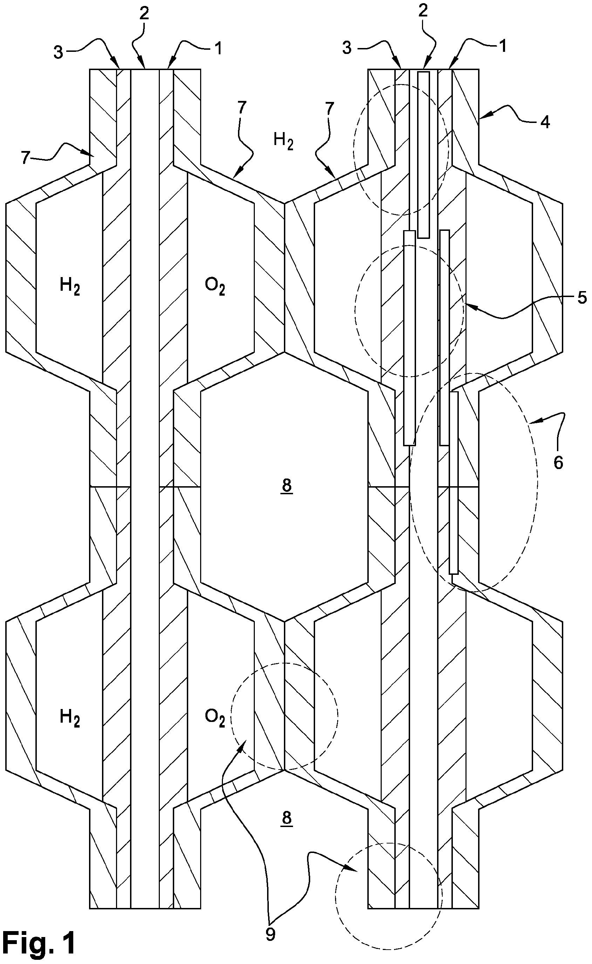

Comme déjà dit, une PEMFC peut comprendre un empilement de cellules unitaires, et donc plusieurs AME disposés entre deux plaques d'écoulement. Dans cette configuration, deux cellules unitaires adjacentes sont généralement séparées par une même plaque, dont l'une des faces est au contact du compartiment cathodique d'un premier AME et l'autre face est au contact du compartiment anodique d'un deuxième AME (Figure 1). Pour cette raison, les plaques d'écoulement des PEMFC sont généralement appelées « plaques bipolaires ».

Ainsi, une plaque bipolaire assure plusieurs fonctions, parmi lesquelles notamment :
- la distribution des gaz (H₂, O₂ ou air) et l'évacuation de l'eau formée, possiblement via des canaux et/ou orifices ménagés en son sein ;
- la collecte des électrons générés au niveau des anodes des différentes cellules unitaires, ce qui implique que la plaque soit électriquement conductrice ;
- le refroidissement des cellules unitaires, possiblement via la circulation d'un liquide de refroidissement en son sein ;
- un support mécanique pour l'AME.

Pour des raisons de coûts, d'encombrement et de performances, une plaque bipolaire pour PEMFC est généralement réalisée en métal.

La plaque bipolaire est toutefois positionnée dans un environnement corrosif, ce qui peut conduire à sa dégradation dans le temps avec, pour conséquence, le relargage d'ions métalliques dans le cas d'une plaque métallique.

Plusieurs conséquences peuvent découler de cette corrosion :

Dans des cas extrêmes, les phénomènes de corrosion peuvent entraîner la perforation de la plaque, d'où une perte d'étanchéité entre compartiments anodique et cathodique.

La corrosion de la plaque peut entraîner la formation d'une couche d'oxyde isolante sur le métal, ce qui augmente sa résistance de contact avec la couche de diffusion gazeuse, d'où une résistance électrique accrue entre la plaque et la GDL, et une réduction des performances de la pile à combustible.

En outre, les ions métalliques relargués peuvent altérer le fonctionnement de la membrane électrolytique. Ainsi, WANG et al. (Journal of Power Sources 183, 2008, 576-580) et KELLY et al. (Journal of Power Sources 145, 2005, 249-252) ont mis en évidence l'influence négative d'ions métalliques (Fe³⁺ et Cr³⁺; Fe³⁺, Cu²⁺ et Ni²⁺, respectivement) sur la conductivité d'une membrane échangeuse de protons de type Nafion^{®}. Les ions métalliques peuvent également « polluer » le catalyseur présent aux électrodes, en occupant les sites actifs, et diminuer ainsi l'activité catalytique. Par conséquent, les performances et la durabilité de la pile peuvent être très négativement affectées par la dégradation de la plaque bipolaire.

Afin de diminuer la corrosion des plaques métalliques, les solutions mises en oeuvre dans l'art antérieur ont notamment consisté à protéger lesdites plaques au moyen d'un revêtement présentant également des propriétés de conduction électrique.

Il peut notamment s'agir d'un revêtement à base de métaux nobles, ou de carbone dans une matrice polymérique.

A cet égard, le document EP 2 469 634 décrit une plaque bipolaire métallique présentant un film discontinu à base d'un métal noble (Au, Pt, Ir, Ru) et un film d'oxyde formé sur la partie de la plaque ne comprenant pas le film discontinu.

Le document EP 2 112 250 décrit une plaque bipolaire métallique présentant, à sa surface, une couche passive à base de chrome, puis un film en métal nitride (MNₓ), en métal/métal nitride (M/MNₓ), en métal carbide (MC_{y}), ou en métal boride (MB_{z}).

En outre, le document US 7,699,916 décrit une plaque bipolaire présentant un revêtement en couche polymérique contenant des particules conductrices de taille inférieure à 10 micromètres.

Les documents US 2011/223522, EP 2 234 192 et US 2004/091768 divulguent également des plaques bipolaires métalliques dont au moins une des faces est recouverte par un revêtement comportant un polymère et un matériau conducteur.

Le document FR 2 971 628 décrit, quant à lui, l'insertion de couches constituées d'une matrice en polyuréthane dans laquelle sont incluses des charges de matériau conducteur, entre la plaque bipolaire métallique et la couche de diffusion des gaz.

En pratique, les revêtements développés dans l'art antérieur permettent de protéger physiquement la plaque bipolaire métallique du milieu corrosif de la pile à combustible.

Il existe toutefois un besoin permanent de développer de nouvelles solutions techniques permettant de limiter la dégradation des plaques métalliques pour PEMFC et surtout d'améliorer la durabilité des performances de ces piles.

### EXPOSE DE L'INVENTION

C'est dans ce cadre que s'inscrit la présente invention. De manière originale, le Demandeur a mis au point un revêtement de plaque métallique pour PEMFC, constituant à la fois une barrière physique et chimique. Ainsi, la plaque est protégée de l'environnent corrosif, ce qui évite sa dégradation. En outre, le coeur de pile, à savoir aussi bien la membrane que les électrodes, se trouve protégé de l'éventuelle libération d'ions métalliques, ce qui permet de maintenir les performances et la durabilité de la pile.

Ainsi et selon un premier aspect, l'invention concerne une plaque métallique présentant, sur au moins l'une de ses faces, un revêtement comprenant :
- des charges de matériau conducteur ;
- un polymère servant de liant ;
- un composé absorbeur des cations métalliques.

Dans le cadre de l'invention, on appelle « plaque métallique » une plaque à base de métal, voire constituée de métal, avantageusement de l'acier inoxydable. Les matériaux utilisés pour réaliser des plaques bipolaires à base de métal sont présentés dans le document Hermann et al. (International (Journal of Hydrogel Energy 30 (2005) 1297-1302).

La plaque métallique est donc réalisée en un matériau conducteur électrique permettant notamment d'assurer la collecte des électrons générés à l'anode de la pile. Ainsi et dans le cadre de l'invention, elle peut aussi bien être appelée « plaque d'écoulement », « plaque collectrice de courant » ou « plaque bipolaire ».

Dans le cadre de son utilisation en pile à combustible, une telle plaque présente avantageusement une forme rectangulaire voire carrée, avec une surface comprise entre 100 et 1000 cm², par exemple 220 cm². Son épaisseur peut varier entre 50 et 500 µm, par exemple 200 µm. A noter qu'une plaque peut en fait être constituée de deux ou plusieurs plaques empilées, avantageusement soudées entre elles, ce qui permet d'aménager des canaux de refroidissement entre les plaques.

A nouveau en relation avec son utilisation en pile, une telle plaque est avantageusement dotée de dents et/ou de canaux. De manière privilégiée, les dents se situent sur la face de la plaque en contact avec l'électrode de sorte à collecter le courant produit, alors que les canaux permettent l'arrivée des gaz et l'évacuation de l'eau produite.

De manière caractéristique selon l'invention, une telle plaque est dotée d'un revêtement sur au moins l'une de ses faces, avantageusement celle destinée à être en contact avec la couche de diffusion des gaz. En pratique et dans le cas d'un empilement d'AME et d'une plaque bipolaire, la plaque métallique est dotée d'un revêtement sur ses deux faces. Selon un mode de réalisation particulier, le revêtement forme une couche continue sur toute la surface de la plaque.

Avantageusement, le revêtement se présente sous forme d'une couche continue d'épaisseur préférentiellement uniforme. Encore plus avantageusement, l'épaisseur du revêtement est comprise entre 1 et 50 µm, voire comprise entre 10 et 20 µm.

Un tel revêtement comprend au moins un polymère constituant une matrice polymérique et/ou jouant le rôle de liant, capable de conférer une résistance mécanique acceptable au revêtement. Par ailleurs, un tel polymère doit résister aux conditions de fonctionnement d'une pile. Un mélange de polymères peut également être envisagé.

Selon un mode de réalisation particulier, un tel polymère est de type polyuréthane, à savoir un polymère d'uréthane. En pratique, le polyuréthane peut être obtenu par condensation entre un polyol (par exemple le Bayhydrol^{®} de Bayer) et un polyisocyanate, avantageusement un diisocyanate (par exemple le Bayhydrur^{®} de Bayer).

Pour conférer le caractère conducteur électrique recherché pour un tel revêtement, celui-ci comprend également des charges de matériau conducteur, avantageusement incluses dans la matrice polymérique. Ces charges peuvent être constituées de noir de carbone, de graphite, de fibres de carbone, ou de leur mélange.

De manière avantageuse, ces charges se présentent sous forme de particules ayant une taille inférieure au micromètre. A titre d'exemple, du noir de carbone de granulométrie de taille nanométrique, avantageusement de dimension inférieure à 100 nm, peut être mis en oeuvre. Ces charges peuvent notamment se présenter sous la forme d'agrégats de nanoparticules de noir de carbone.

La proportion massique des charges dans le revêtement est avantageusement comprise entre 35 et 55% (poids sec des charges par rapport au poids sec du revêtement total), voire entre 40 et 50%.

De manière caractéristique selon l'invention, le revêtement présente également la propriété d'absorber les ions métalliques, en particulier les cations métalliques susceptibles d'être relargués par la plaque métallique en présence.

Dans le cas d'une plaque en acier, il s'agit notamment des ions ferrique (Fe³⁺), des ions chrome (Cr³⁺), et éventuellement des ions nickel (Ni²⁺) ou molybdène (Mo²⁺).

Selon un premier mode de réalisation, ledit composé peut être du charbon actif supposé absorber les ions métalliques en raison de sa porosité élevée.

De manière privilégiée, le composé absorbeur des cations métalliques présente des fonctions ou groupements ioniques et/ou ionisables. Dans le cas particulier où le composé est un polymère, celui-ci peut comprendre des unités ioniques et/ou ionisables, constituant ainsi un ionomère.

Au vu de la nature cationique des ions métalliques en présence, le composé absorbeur des ions métalliques est avantageusement porteur de fonctions anioniques, encore plus avantageusement sulfoniques (SO₃H/SO₃⁻).

En pratique, une réaction acido-basique a lieu entre le cation M⁺ et la fonction SO3⁻ du composé, avec un équilibre fortement déplacé vers la formation d'un couple d'ion intime. La mobilité des cations métalliques est très faible car ces ions ont une forte affinité avec la base du fait qu'il soit un acide « mou », contrairement aux protons qui sont « durs » (d'où une faible affinité et une plus grande mobilité).

Selon un mode de réalisation particulier, cette fonction d'absorption des cations métalliques peut être assurée directement par le polymère jouant le rôle de liant, qui représente avantageusement de 45 à 65% en poids du revêtement final (poids sec du polymère par rapport au poids sec du revêtement total), encore plus avantageusement entre 50 et 60%. Dans ce cas particulier, le revêtement comprend, voire même est constitué d'un ionomère capable d'absorber les cations métalliques et de jouer le rôle de liant, ainsi que des charges de matériau conducteur.

Selon un autre mode de réalisation, le polymère jouant le rôle de liant et le composé absorbeur de cations métalliques sont deux molécules distinctes. De manière générale, le composé absorbeur des cations métalliques représente avantageusement entre 1 et 10% en poids du revêtement (poids sec du composé absorbeur des cations métalliques par rapport au poids sec du revêtement total), voire entre 5 et 10%.

Selon un mode de réalisation privilégié, le composé absorbeur des cations métalliques est également de nature polymérique, constituant alors un ionomère, avantageusement un ionomère absorbeur de cations. Dans le cadre de l'invention, on entend par « ionomère absorbeur de cations », un ionomère dont les groupements ionisés et/ou ionisables permettent notamment d'absorber les ions métalliques chargés positivement.

Dans ce cas de figure, le polymère servant de liant et le polymère absorbeur des cations métalliques représentent avantageusement entre 45 et 65% en poids du revêtement final (poids sec des polymères par rapport au poids sec du revêtement total), encore plus avantageusement entre 50 et 60%. A l'intérieur de la composante polymérique du revêtement, l'ionomère absorbeur des cations métalliques représente avantageusement entre 1 et 10% en poids du revêtement (poids sec de l'ionomère absorbeur des cations métalliques par rapport au poids sec du revêtement total), voire entre 5 et 10%.

Un tel ionomère peut notamment être un polymère dont la chaîne principale comprend des groupements CFₙ (n = 1, 2), par ailleurs porteurs de groupements acide sulfonique, sous forme acide ou salifiée. Il peut notamment s'agir d'un polymère perfluorosulfoné ou d'acide sulfonique perfluoré (PFSA pour « *PerFluoro Sulfonic Acid* »). Les PFSA sont des ionomères dérivés de l'acide perfluorosulfoné, c'est-à-dire comprenant des groupements sulfonates SO₃⁻. En outre, il s'agit de polymères fluorés.

Ainsi et de manière inattendue, le Demandeur a montré que des ionomères couramment utilisés dans le cadre de PEMFC, constitutifs de la membrane pour assurer le transport des protons et éventuellement présents dans les couches catalytiques, pouvaient être intégrés dans des revêtements selon l'invention. Ces ionomères utilisés pour leur capacité à absorber les protons (H⁺) sont donc mis en oeuvre dans la plaque pour absorber les cations métalliques.

De manière générale, les polymères PFSA ont une formule -[CF₂-CF₂]ₓ-[CF(O-R^{f}-SO₃)-CF₂]_{y}, dans laquelle R^{f} est un groupement carboné fluoré, x et y étant des nombres entiers positifs.

De tels ionomères sont disponibles commercialement par exemple sous le nom de Nafion^{®} (Dupont), Aquivion^{®} (Solvay), Flemion^{®} (Asahi Glass), Fumion^{®} (Fumatech), ou Aciplex^{®} (Asahi Chemical Company).

Un ionomère particulièrement adapté est un dérivé tétrafluoroéthylène sulfoné, par exemple commercialisé sous le nom de Nafion^{®} (Dupont). A titre d'exemple, le produit Nafion^{®} D2020 possédant un numéro CAS 31175-20-9 peut être mis en oeuvre dans le cadre de la présente invention.

La structure de la chaîne pendante d'un tel ionomère est avantageusement la suivante : 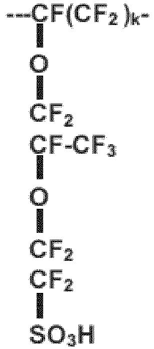 avec k, un nombre entier positif.

Un autre ionomère adapté est un copolymère de tétrafluoroéthylène et de Sulfonyl Fluoride Vinyl, par exemple commercialisé sous le nom d'Aquivion^{®} (Solvay), avantageusement sous le numéro CAS 111173-25-2.

La structure de la chaîne pendante d'un tel ionomère est avantageusement la suivante : 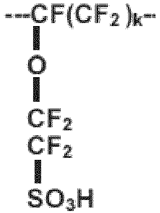 avec k, un nombre entier positif.

Selon un mode de réalisation particulier, l'ionomère présent dans le revêtement selon l'invention est le même que celui constituant la membrane de la pile, et éventuellement que celui présent dans les couches catalytiques de ladite pile.

Comme déjà dit, le composé absorbeur des ions métalliques, avantageusement un ionomère, encore plus avantageusement un PFSA comme le Nafion^{®}, peut représenter de 1 à 10% en poids du revêtement (poids sec du composé par rapport au poids sec du revêtement total), voire de 5 à 10%.

Dans le cas où il s'agit du même ionomère que celui constituant la membrane de la pile, la quantité d'ionomère présent dans le revêtement peut être exprimée en % en poids par rapport au poids de la membrane. De manière avantageuse, la proportion massique de l'ionomère dans le revêtement représente de 0,5 à 5% du poids de la membrane de la pile.

Ainsi et de manière avantageuse, le revêtement de la plaque métallique selon l'invention comprend, en poids sec par rapport au poids sec du revêtement :
- 35 à 55 % de charges de matériau conducteur ;
- 45 à 65 % de polymères dont 1 à 10 % du composé absorbeur des cations métalliques, avantageusement lorsque celui-ci est un ionomère.

Selon un mode de réalisation privilégié de l'invention, le revêtement comprend ou est constitué de :
- 40 à 50 % de charges de matériau conducteur, avantageusement du noir de carbone ;
- 50 à 60 % de polymères dont 5 à 10 % du composé absorbeur des cations métalliques, avantageusement du polyuréthane et un PFSA tel que le Nafion^{®}.

Le revêtement peut également comprendre au moins un additif, pouvant être choisi dans le groupe comprenant :
- un tensioactif, tel que le SDS (Sodium Dodécyl Sulfate) ou le Triton X100, destiné à aider à la dispersion des charges dans la solution permettant d'obtenir le revêtement ; et/ou
- un agent de surface, tel que le Byk33, destiné à niveler la surface du revêtement permettant ainsi un meilleur contact électrique.

Ces additifs peuvent toutefois présenter l'inconvénient de polluer la membrane. De manière remarquable, il a été observé dans le cadre de l'invention que la présence du composé absorbeur de cations métalliques pouvait permettre de se passer d'un tensioactif et ainsi éviter une éventuelle pollution de la membrane. Ceci est particulièrement le cas lorsque le composé absorbeur des cations métalliques est un ionomère présentant une chaîne hydrophobe et un groupement hydrophile, notamment un PFSA tel que le Nafion^{®}. Ainsi et selon un mode de réalisation particulier, le revêtement selon l'invention ne contient pas de tensioactif additionnel.

De manière adaptée, une telle plaque est destinée à des piles à combustible, avantageusement à des piles à combustible à membrane échangeuse de protons (PEMFC)

Ainsi et selon un autre aspect, la présente invention vise une pile à combustible à membrane échangeuse de protons (PEMFC) comprenant au moins une plaque métallique telle que définie ci-dessus.

De manière avantageuse et dans ce contexte, la plaque métallique présente un revêtement au moins sur sa face en contact avec la couche de diffusion des gaz (GDL). Dans le cas d'une plaque bipolaire et d'un empilement de cellules, la plaque comprend un revêtement tel que défini ci-dessus sur chacune de ses faces.

Comme déjà dit, le composé absorbeur des cations métalliques est préférentiellement le même ionomère que celui constitutif de la membrane et/ou que celui présent dans les couches catalytiques, avantageusement un PFSA tel que le Nafion^{®}.

Selon un autre aspect, la présente invention concerne une composition et un procédé permettant d'obtenir une plaque métallique revêtue, comme définie ci-dessus.

De manière caractéristique, une telle composition comprend :
- des charges de matériau conducteur ;
- un polymère destiné à jouer le rôle de liant ou des précurseurs de celui-ci ;
- un composé absorbeur des cations métalliques, avantageusement un ionomère ;
- un solvant.

Le solvant véhicule doit permettre la solubilisation du polymère jouant le rôle de liant et/ou du ionomère, et peut être de l'eau et/ou un alcool (éthanol, propanol,...). Il peut bien sûr s'agir d'un mélange de solvants. Dans la composition selon l'invention, la proportion massique en matière sèche est typiquement comprise entre 1 et 20%, dépendant notamment du procédé de dépôt, le solvant constituant alors de 80 à 99% en masse de la composition.

Les proportions massiques, dans la composition, des charges de matériau conducteur, du polymère liant et du composé absorbeur des cations métalliques sont telles que, après évaporation du solvant véhicule, leurs proportions massiques dans le revêtement sont comme indiquées ci-dessus.

A noter que le polymère jouant le rôle de liant peut être obtenu par polymérisation directement dans la composition ou même *in situ* sur la plaque. Dans ce cas de figure, des monomères adaptés ou précurseurs peuvent être utilisés à la place du polymère final. Dans le cas du polyuréthane par exemple, la composition peut contenir un polyol (tel que le Bayhydrol^{®} commercialisé par Bayer) et un polyisocyanate (tel que le Bayhydrur^{®} commercialisé par Bayer). En pratique, la polymérisation a lieu par traitement thermique, typiquement dans les conditions suivantes ;
- à une température comprise entre 130°C et 170°C, avantageusement égale à 135°C ;
- pendant une durée comprise entre quelques minutes et quelques heures, avantageusement pendant 30 à 60 min.

Comme déjà mentionné en rapport avec le revêtement, une telle composition peut également comprendre des additifs.

Il peut s'agir notamment d'un tensioactif, tel que le SDS (Sodium Dodécyl Sulfate) ou le Triton X100. En effet, il est connu qu'un tensioactif aide à la dispersion du noir de carbone et du liant en phase solvant. La proportion massique du tensioactif dans la composition doit toutefois être aussi faible que possible car comme déjà dit, celui-ci peut polluer la membrane par relargage. Elle est avantageusement inférieure à 1%, typiquement comprise entre 0,1 et 1%.

De manière similaire à la préparation d'une composition destinée à la fabrication d'un revêtement classique, la composition est préparée comme suit :
- dissolution du tensioactif dans le solvant, avantageusement sous agitation ;
- ajout des charges du matériau conducteur, avantageusement du noir de carbone ;
- ajout du liant polymérique ;
- ajout du composé absorbeur des cations métalliques, avantageusement un ionomère, encore plus avantageusement un PFSA tel que le Nafion^{®} ;
- éventuellement dispersion des charges du matériau conducteur, avantageusement du noir de carbone, par exemple au barreau magnétique ou aux ultra-sons.

De manière remarquable, le composé absorbeur des cations métalliques, avantageusement un ionomère, encore plus avantageusement un PFSA tel que le Nafion^{®}, peut lui-même aider à la dispersion des charges de matériau conducteur dans le système solvant.

Selon un mode de réalisation particulier, la composition selon l'invention ainsi que le revêtement obtenu ne contiennent donc pas d'autre tensioactif.

Dans ce cas de figure, le protocole de préparation de la composition se trouve simplifié :
- dissolution du composé absorbeur des cations métalliques, avantageusement un ionomère, encore plus avantageusement un PFSA tel que le Nafion^{®}, dans le solvant, préférentiellement sous agitation ;
- ajout des charges du matériau conducteur, avantageusement du noir de carbone ;
- ajout du liant polymérique ;
- éventuellement dispersion des charges du matériau conducteur, avantageusement du noir de carbone, par exemple au barreau magnétique ou aux ultra-sons.

Comme déjà dit, d'autres additifs peuvent être présents dans une telle composition, comme par exemple des agents de surface permettant de lisser la surface du revêtement.

Est également visé par la présente invention un procédé de préparation de la plaque métallique comprenant un revêtement tel que défini ci-dessus, comprenant les étapes suivantes :
- dépôt de la composition décrite sur une plaque métallique ;
- séchage de la plaque métallique.

Le séchage est réalisé à une température permettant l'évaporation du système solvant en présence, par exemple entre 60 et 80°C pour un mélange eau/éthanol.

Dans le cas où le polymère jouant le rôle de liant n'est pas sous sa forme polymérisée, un traitement thermique peut être réalisé dans les conditions décrites ci-dessus. Ce traitement thermique peut se faire après le séchage de la plaque ou peut remplacer ce séchage.

Le dépôt de la composition pour former le revêtement peut être réalisé par toute méthode classique connue de l'homme du métier, notamment par enduction, par pulvérisation, par rouleau ou par sérigraphie.

L'invention et les avantages qui en découlent ressortiront mieux des figures et exemples suivants, donnés afin d'illustrer l'invention et non de manière limitative.

### DESCRIPTION DES FIGURES

La figure 1 illustre le phénomène de corrosion au sein d'une pile à combustible à membrane échangeuse de protons.

### EXEMPLES DE REALISATION

### 1/Détérioration d'une pile à combustible :

La figure 1 illustre une pile à combustible comprenant un empilement d'AMEs (assemblage membrane-électrodes) séparées par une plaque bipolaire (7).

Chaque AME est constitué de :
- une anode (3) à laquelle l'hydrogène est oxydé pour donner deux protons et deux électrons : H₂ → 2H⁺ + 2e⁻ ;
- une membrane échangeuse de protons (2) ;
- une cathode (1) à laquelle l'oxygène est réduit en eau : 2H⁺ + 2e⁻ + 1/2O₂ → H₂O.

Chacune des électrodes est supportée par un collecteur de courant, dans ce cas une plaque bipolaire (7). Cette plaque bipolaire (préférentiellement deux plaques soudées ensemble, pour avoir des canaux de refroidissement entre les deux) (7) présente une structure permettant le passage des gaz réactifs (H₂ et O₂ ou air), mais également d'un liquide de refroidissement (8).

Dans ce mode de réalisation particulier, la plaque bipolaire métallique présente des agencements permettant le refroidissement d'une pile à combustible comprenant un empilement de cellules unitaires.

Lors du fonctionnement de la pile à combustible, les plaques bipolaires métalliques (7) peuvent être dégradées par les phénomènes de corrosion, notamment causés par la présence d'un oxydant (oxygène) ou d'un milieu acide (protons issus de la réaction à l'anode).

Comme déjà indiqué, la corrosion de la plaque bipolaire métallique (7) génère des ions métalliques qui peuvent :
- (5) empoisonner les catalyseurs présents au niveau des électrodes (1,3);
- (4) diminuer la conductivité protonique de la membrane (2) ;
- (6) entrainer la formation d'un film passif sur la plaque bipolaire (7).

La plaque bipolaire métallique - objet de la présente invention, permet de remédier à ces écueils, eu égard à la nature de son revêtement, en particulier la présence d'un composé, avantageusement un ionomère, capable de capter les ions métalliques.

En l'absence d'un tel revêtement, la corrosion peut entrainer la perforation (9) de la membrane échangeuse de protons (2) et même de la plaque bipolaire (7), comme le montre la figure 1.

La plaque bipolaire assure le transport des électrons générés à l'anode (3) vers la cathode (1). Elle permet également de séparer de manière étanche l'anode et la cathode afin d'éviter tout contact entre les gaz (H₂ et O₂ ou air).

En outre, la plaque bipolaire métallique assure un support mécanique à la cellule. Elle peut également permettre la distribution des gaz (H₂ et O₂ ou air) au niveau des électrodes.

L'eau formée à la cathode peut également être évacuée grâce à la structure de la plaque bipolaire métallique.

Finalement, la régulation thermique de la pile peut être assurée par circulation d'un liquide de refroidissement au sein de la plaque bipolaire métallique (8).

### 2/Protection de la plaque métallique à l'aide d'un revêtement:

### 2-1 Composition servant au dépôt du revêtement :

Une encre adaptée à l'obtention d'un revêtement selon l'invention est préparée selon le protocole suivant :
- Pesée de l'ionomère absorbeur des cations métalliques de type PFSA (Nafion^{®}): 1,6g, l'extrait sec représentant 20% (soit 0,32 g) ;
- Pesée du solvant : mélange eau/éthanol, en proportion 7:1 : 400g d'eau + 60g d'éthanol ;
- Mélange de l'ionomère dans le solvant à l'aide d'un barreau magnétique ;
- Pesée du noir de carbone (Carbone Vulcan XC72 = charges de matériau conducteur) : 4g ;
- Mélange au barreau magnétique ;
- Pesée du liant en phase solvant : produit A (polyuréthane, Bayer Bayhydrol^{®} U XP 2239, 10g, avec un extrait sec à 33% soit 3,3g) et produit B (isocyanate, Bayer Bayhydrur^{®} BL 5335, 6g avec un extrait sec à 33% soit 2g) ;
- Dispersion au bain à ultra-son pour casser les agrégats de carbone et mélange au barreau magnétique.

L'encre finale a un extrait sec de 2%, et le solvant a un ratio eau/alcool de 7.

Le revêtement obtenu à l'aide d'une telle composition présente donc la composition massique suivante :
- particules conductrices : Carbone Vulcan XC72 : 41, 6 %
- liant : polyuréthane Bayer Bayhydrol®+Bayhydrur® : 55%
- ionomère absorbeur des cations métalliques : Nafion^{®} : 3,4%

### 2-2 Obtention du revêtement :

Le revêtement est déposé par pulvérisation, mais peut l'être également par enduction, par rouleau ou par sérigraphie.

La buse de pulvérisation parcourt l'ensemble de la plaque bipolaire, par lignes successives. La répétition de ce cycle permet le dépôt de fines couches successives, d'épaisseur de l'ordre du µm. Le dépôt d'une vingtaine de couches permet d'obtenir le dépôt final.

Le protocole de dépôt du revêtement est le suivant :
- Nettoyage de la plaque bipolaire, par exemple à l'acétone et à l'alcool.
- Mise en route du procédé et mise en température du plateau à 60°C.
- Remplissage du réservoir avec l'encre.
- Dépôt multicouches par cycle successifs. Le séchage s'opère au fur et à mesure du dépôt de l'encre.
- Arrêt du procédé et retrait de la plaque revêtue.
- Traitement thermique à 135°C pour réticuler le polymère, pendant une durée de 60 minutes.

## Revendications

1. Plaque métallique pour pile à combustible à membrane échangeuse de protons (PEMFC) présentant, sur au moins l'une de ses faces, un revêtement comprenant :
- des charges de matériau conducteur ;
- un polymère servant de liant ;
- un composé absorbeur de cations métalliques.

2. Plaque métallique selon la revendication 1, ***caractérisée* en ce que** le composé absorbeur des cations métalliques est un ionomère, avantageusement un polymère perfluorosulfoné (PFSA).

3. Plaque métallique selon la revendication 1 ou 2, ***caractérisée* en ce que** les charges de matériau conducteur sont constituées de noir de carbone, de graphite, de fibres de carbone, ou de leur mélange.

4. Plaque métallique selon l'une des revendications 1 à 3, ***caractérisée* en ce que** le polymère servant de liant est du polyuréthane.

5. Plaque métallique selon l'une des revendications 2 à 4, ***caractérisée* en ce que** le revêtement comprend, en poids sec par rapport au poids sec du revêtement :
- 35 à 55 % de charges de matériau conducteur ;
- 45 à 65 % de polymère dont 1 à 10 % du composé absorbeur des cations métalliques.

6. Plaque métallique selon l'une des revendications précédentes, ***caractérisée* en ce que** le revêtement ne contient pas de tensioactif.

7. Pile à combustible à membrane échangeuse de protons (PEMFC) comprenant au moins une plaque métallique selon l'une des revendications 1 à 6.

8. Pile à combustible à membrane échangeuse de protons (PEMFC) selon la revendication 7, ***caractérisée* en ce que** la plaque métallique présente un revêtement au moins sur sa face en contact avec la couche de diffusion des gaz (GDL).

9. Pile à combustible à membrane échangeuse de protons (PEMFC) selon la revendication 7 ou 8, ***caractérisée* en ce que** le composé absorbeur des cations métalliques est le même ionomère que celui constitutif de la membrane et/ou que celui présent dans les couches catalytiques.

10. Composition pour l'élaboration du revêtement d'une plaque métallique objet des revendications 1 à 6, comprenant :
- des charges de matériau conducteur ;
- un polymère destiné à jouer le rôle de liant ou des précurseurs de celui-ci ;
- un composé absorbeur de cations métalliques ;
- un solvant.

11. Procédé de préparation d'une plaque métallique objet de l'une des revendications 1 à 6, comprenant les étapes suivantes :
- dépôt de la composition selon la revendication 10 sur une plaque métallique, avantageusement par enduction, par pulvérisation, par rouleau ou par sérigraphie ;
- séchage de la plaque métallique.

12. Procédé de préparation d'une plaque métallique selon la revendication 11, ***caractérisé* en ce qu'**après séchage, la plaque est soumise à un traitement thermique permettant l'obtention du polymère à partir des précurseurs.

## Patentansprüche

1. Metallplatte für eine Protonenaustauschmembran-Brennstoffzelle (PEMFC), die zumindest auf einer ihrer Seiten eine Beschichtung aufweist, die umfasst:
- Füllstoffe aus leitendem Material;
- ein als Bindemittel dienendes Polymer;
- eine Metallkationen absorbierende Zusammensetzung.

2. Metallplatte nach Anspruch 1, **dadurch gekennzeichnet, dass** die Metallkationen absorbierende Zusammensetzung ein Ionomer, vorteilhafter Weise ein perfluorsulfoniertes Polymer (PFSA) ist.

3. Metallplatte nach Anspruch 1 oder 2, **dadurch gekennzeichnet, dass** die Füllstoffe aus leitendem Material aus Rußschwarz, Graphit, Kohlenstofffasern oder deren Gemisch bestehen.

4. Metallplatte nach einem der Ansprüche 1 bis 3, **dadurch gekennzeichnet, dass** das als Bindemittel dienende Polymer Polyurethan ist.

5. Metallplatte nach einem der Ansprüche 2 bis 4, **dadurch gekennzeichnet, dass** die Beschichtung in Trockengewicht bezogen auf das Trockengewicht der Beschichtung umfasst:
- 35 bis 55% Füllstoffe aus leitendem Material;
- 45 bis 65% Polymer, davon 1 bis 10% der Metallkationen absorbierenden Zusammensetzung.

6. Metallplatte nach einem der vorhergehenden Ansprüche, **dadurch gekennzeichnet, dass** die Beschichtung kein Tensid enthält.

7. Protonenaustauschmembran-Brennstoffzelle (PEMFC), umfassend mindestens eine Metallplatte nach einem der Ansprüche 1 bis 6.

8. Protonenaustauschmembran-Brennstoffzelle (PEMFC) nach Anspruch 7, **dadurch gekennzeichnet, dass** die Metallplatte zumindest auf ihrer mit der Gasdiffusionsschicht (GDL) in Kontakt stehenden Seite eine Beschichtung aufweist.

9. Protonenaustauschmembran-Brennstoffzelle (PEMFC) nach Anspruch 7 oder 8, **dadurch gekennzeichnet, dass** die Metallkationen absorbierende Zusammensetzung dasselbe Ionomer wie dasjenige ist, das die Membran bildet und/oder dasjenige, das in den katalytischen Schichten vorhanden ist.

10. Zusammensetzung zur Ausarbeitung der Beschichtung einer den Gegenstand der Ansprüche 1 bis 6 bildenden Metallplatte, Folgendes umfassend.
- Füllstoffe aus leitendem Material;
- ein Polymer, das dazu bestimmt ist, die Aufgabe eines Bindemittels oder von dessen Vorstufen zu übernehmen;
- eine Metallkationen absorbierende Zusammensetzung;
- ein Lösungsmittel.

11. Verfahren zur Herstellung einer den Gegenstand eines der Ansprüche 1 bis 6 bildenden Metallplatte, die folgenden Schritte umfassend.
- Abscheiden der Zusammensetzung nach Anspruch 10 auf einer Metallplatte, vorteilhafter Weise mittels Beschichtung, mittels Aufstäubung, mittels Rolle oder mittels Siebdruck;
- Trocknen der Metallplatte.

12. Verfahren zur Herstellung einer Metallplatte nach Anspruch 11, **dadurch gekennzeichnet, dass** die Platte nach dem Trocknen einer Wärmebehandlung unterzogen wird, die den Erhalt des Polymers aus den Vorstufen ermöglicht.

## Claims

1. A metallic plate for a proton-exchange membrane fuel cell (PEMFC) having, on at least one of its surfaces, a coating comprising:
- conductive material fillers;
- a polymer used as a binder;
- a metal cation absorbing compound.

2. The metallic plate of claim 1, wherein the metal cation absorbing compound is an ionomer, advantageously a perfluorosulphonic polymer (PFSA).

3. The metallic plate of claim 1 or 2, wherein the conductive material fillers are made of carbon black, graphite, carbon fibers, or a mixture thereof.

4. The metallic plate of any of claims 1 to 3, wherein the polymer used as a binder is polyurethane.

5. The metallic plate of any of claims 2 to 4, wherein the coating comprises, in dry weight relative to the dry weight of the coating:
- from 35 to 55% of conductive material fillers;
- from 45 to 65% of polymer, including from 1 to 10% of the metal cation absorbing compound.

6. The metallic plate of any of the foregoing claims, wherein the coating comprises no surface-active agent.

7. A proton-exchange membrane fuel cell (PEMFC) comprising at least one metallic plate of any of claims 1 to 6.

8. The proton-exchange membrane fuel cell (PEMFC) of claim 7, wherein the metallic plate has a coating at least on its surface in contact with the gas diffusion layer (GDL).

9. The proton-exchange membrane fuel cell (PEMFC) of claim 7 or 8, wherein the metal cation absorbing compound is preferably the same ionomer as that forming the membrane and/or as that present in the catalytic layers.

10. A composition for the forming of the coating of the metallic plate of claims 1 to 6, comprising:
- conductive material fillers;
- a polymer intended to behave as a binder or precursors thereof;
- a metal cation absorbing compound;
- a solvent.

11. A method of preparing the metallic plate of any of claims 1 to 6, comprising the steps of:
- depositing the composition of claim 10 on a metallic plate, advantageously by spreading, by spraying, by roller application, or by silk-screening;
- drying the metallic plate.

12. The method of preparing a metallic plate of claim 11, wherein after drying, the plate is submitted to a thermal treatment enabling to obtain the polymer from the precursors.
